# EUROPEAN PATENT SPECIFICATION

(11) **EP 4 422 886 B1**
(45) Date of publication and mention of the grant of the patent: **23.07.2025**
(21) Application number: 21810148.3
(22) Date of filing: 29.10.2021
(51) Int. Cl.: B60C 1/00, C08L 7/00

(54) **A RUBBER COMPOSITION**
KAUTSCHUKZUSAMMENSETZUNG
COMPOSITION DE CAOUTCHOUC

(43) Date of publication of application: 04.09.2024
(73) Proprietor: COMPAGNIE GENERALE DES ETABLISSEMENTS MICHELIN, 63000 Clermont-Ferrand (FR)
(72) Inventor: MAETA Yoshiko, Tokyo 163-1073 (JP); MAYER Sylvain, 63040 Clermont-Ferrand Cedex 9 (FR); RIOU Aline, 63040 Clermont-Ferrand Cedex 9 (FR)
(74) Representative: M.F.P. Michelin
(86) International application number: PCT/JP2021/039972
(87) International publication number: WO 2023/073906

(56) References cited:
- WO-A1-2020/128330
- US-A1- 2020 101 793
- US-A1- 2021 253 833

## Description

### Technical Field

The field of the invention is that of rubber compositions, particularly rubber compositions for rubber products coming into contact with the ambient air, more particularly rubber compositions for tires, shoes, conveyor belts or rubber tracks, still more particularly rubber compositions for tires, especially rubber compositions for tire sidewalls.

### Background

Rubber products coming into contact with the ambient air can be deteriorated by ozone, and a known solution is to add anti-ozone waxes to rubber compositions for the rubber products in order to get good resistance to ozone.

### Citation List

### Patent Literature

PTL 1: JP6881627
The patent literature 1 discloses a rubber composition for a sidewall of a tire, which comprises a rubber component, a modified rubber crumb and an anti-ozone wax, and which exhibits excellent ozone resistance.

However, the anti-ozone wax has the drawback of migrating towards the outside of the sidewalls, revealing whitish spots which penalizes the aesthetics of the tires. This phenomenon is called efflorescence.

### Summary of Invention

### Technical Problem

During their research, the inventors have discovered that a specific rubber composition intended in particular for a rubber product, in more particular for a tire, a shoe, a conveyor belt or a rubber track, in still more particular for a tire sidewall, which allows unexpectedly improved efflorescence performance without deteriorated ozone resistance performance.

The expression "based on" or "composition based on" should be understood as meaning a composition comprising the mixture, the product of the in situ reaction of the various base constituents used or both, some of these constituents being able to react, being intended to react, or being intended to react and being to react with one another, at least partially, during the various phases of manufacture of the composition or during the subsequent curing, modifying the composition as it is prepared at the start. Thus, the compositions as employed for the invention can be different in the non-crosslinked state and in the crosslinked (vulcanized) state.

The term "phr" means part by weight per hundred parts of elastomers, within the meaning of the preparation of the composition before curing. That is to say, in the case of the presence of a crumb rubber, that the term "phr" means part by weight per hundred parts of "new" elastomers, thus excluding from the base 100 the elastomers contained in the crumb rubber.

In the present description, unless expressly stated otherwise, all the percentages (%) indicated are percentages by weight (wt%).

The expression "elastomer matrix" is understood to mean, in a given composition, all of the elastomers present in said rubber composition.

In the present description, unless expressly indicated otherwise, each Tg_{DSC} (glass transition temperature) is measured in a known way by DSC (Differential Scanning Calorimetry) according to Standard ASTM D3418-08.

Any interval of values denoted by the expression "between a and b" represents the range of values of more than "a" and of less than "b" (i.e. the limits a and b excluded) whereas any interval of values denoted by the expression "from a to b" means the range of values going from "a" to "b" (i.e. including the strict limits a and b).

When reference is made to a "predominant" compound, this is understood to mean, within the meaning of the present invention, that this compound is predominant among the compounds of the same type in the composition, that is to say that it is the one which represents the greatest amount by weight among the compounds of the same type, and preferably more than 50% by weight, more preferably more than 75% by weight. Thus, for example, a predominant polymer is the polymer representing the greatest weight, with respect to the total weight of the polymers in the composition. In the same way, a "predominant" filler is the one representing the greatest weight among the fillers of the composition. By way of example, in a system comprising just one polymer, the latter is predominant within the meaning of the present invention and, in a system comprising two polymers, the predominant polymer represents more than half of the weight of the polymers. On the contrary, a "minor" compound is a compound which does not represent the greatest fraction by weight among the compounds of the same type.

Within the meaning of the present invention, when reference is made to a "predominant" unit (or monomer) within one and the same compound (or polymer), this is understood to mean that this unit (or monomer) is predominant among the units (or monomers) forming the compound (or polymer), that is to say that it is the one which represents the greatest fraction by weight among the units (or monomers) forming the compound (or polymer). Thus, for example, a resin predominantly composed of units resulting from C₅ monomers is a resin in which the C₅ units represent the greatest amount by weight among all the units making up the said resin. In other words, a "predominant" monomer or an assembly of "predominant" monomers is a monomer (or an assembly of monomers) which represents the greatest fraction by weight in the polymer. On the contrary, a "minor" monomer is a monomer which does not represent the greatest molar fraction in the polymer.

The compounds mentioned in the description may be of fossil or biobased origin. In the latter case, they may partially or completely result from biomass or be obtained from renewable starting materials resulting from biomass. Polymers, plasticizers, fillers, and the like, are concerned in particular.

### Solution to Problem

A first aspect of the invention is a rubber composition based on at least an elastomer matrix, an anti-ozone wax; and a crumb rubber; wherein the elastomer matrix comprises an isoprene elastomer; wherein the total amount of the isoprene elastomer is more than 27.00% by weight per 100.00% by weight of the rubber composition; wherein the total amount of the anti-ozone wax is more than 0.60% by weight and less than 1.70% by weight per 100.00% by weight of the rubber composition; wherein the crumb rubber comprises crumb rubber particles having a particle size of less than 74µm; and wherein a ratio by weight of the total amount of the crumb rubber particles having the particle size of less than 74µm to the total amount of the anti-ozone wax is more than 0.65.

### Advantageous Effects of Invention

The specific rubber composition allows unexpectedly improved efflorescence performance without deteriorated ozone resistance performance.

### Description of Embodiments

Each of the below aspect(s), the embodiment(s), the instantiation(s), and the variant(s) including each of the preferred range(s), matter(s) or both may be applied to any one of the other aspect(s), the other embodiment(s), the other instantiation(s) and the other variant(s) of the invention unless expressly stated otherwise.

The rubber composition according to the invention is based on an elastomer matrix.

As is customary, the terms "elastomer" and "rubber", which are interchangeable, are used without distinction in the text.

Elastomer (or loosely "rubber", the two terms being regarded as synonyms) of the "diene" type is to be understood in a known manner as an (meaning one or more) elastomer derived at least partly (i.e. a homopolymer or a copolymer) from diene monomers (monomers bearing two carbon-carbon double bonds, conjugated or not).

These diene elastomers may be classified into two categories: "essentially unsaturated" or "essentially saturated". Generally, the expression "essentially unsaturated" is understood to mean a diene elastomer resulting at least in part from conjugated diene monomers having a content of units of diene origin (conjugated dienes) which is more than 15% (mol%); thus it is that diene elastomers such as butyl rubbers or diene/α-olefin copolymers of the EPDM type do not fall under the preceding definition and may especially be described as "essentially saturated" diene elastomers (low or very low content of units of diene origin, always less than 15%). In the category of "essentially unsaturated" diene elastomers, the expression "highly unsaturated" diene elastomer is understood to mean in particular a diene elastomer having a content of units of diene origin (conjugated dienes) which is more than 50%.

Although it applies to any type of diene elastomer, it is preferably employed with essentially unsaturated diene elastomers.

Given these definitions, the expression diene elastomer capable of being used in the compositions in accordance with the invention is understood in particular to mean:
(a) any homopolymer obtained by polymerization of a conjugated diene monomer, preferably having from 4 to 12 carbon atoms;
(b) any copolymer obtained by copolymerization of one or more conjugated dienes with one another or with one or more vinyl aromatic compounds preferably having from 8 to 20 carbon atoms.

The following are suitable in particular as conjugated dienes: 1,3-butadiene, 2-methyl-1,3-butadiene, 2,3-di(C₁-C₅ alkyl)-1,3-butadienes, such as, for example, 2,3-dimethyl-1,3-butadiene, 2,3-diethyl-1,3-butadiene, 2-methyl-3-ethyl-1 ,3-butadiene or 2-methyl-3-isopropyl-1 ,3-butadiene, an aryl-1,3-butadiene, 1,3-pentadiene or 2,4-hexadiene. The following, for example, are suitable as vinylaromatic compounds: styrene, ortho-, meta- or para-methylstyrene, the"vinyltoluene" commercial mixture, para-(tert-butyl) styrene, methoxystyrenes, chlorostyrenes, vinylmesitylene, divinylbenzene or vinylnaphthalene.

The elastomer matrix in the rubber composition according to the invention comprises an isoprene elastomer.

The isoprene elastomer is understood to mean all the elastomers predominantly composed of isoprene monomers.

According to a preferred embodiment of the invention, the isoprene elastomer is selected from the group consisting of isoprene polymers, isoprene copolymers and combinations thereof.

According to a more preferred embodiment of the above preferred embodiment, the isoprene copolymers are selected from the group consisting of butadiene isoprene copolymers (BIR), styrene isoprene copolymers (SIR), styrene butadiene isoprene copolymers (SBIR) and combinations thereof.

According to a still more preferred embodiment of the above more preferred embodiment, the butadiene isoprene copolymers (BIR) have an isoprene content of more than 50% by weight and less than 90% by weight per 100% by weight of the butadiene isoprene copolymers (BIR).

According to a still more preferred embodiment of the above more preferred embodiment, the butadiene isoprene copolymers (BIR) have a Tg_{DSC} of from -80°C to - 40°C.

According to a still more preferred embodiment of the above more preferred embodiment, the styrene isoprene copolymers (SIR) have a styrene content of more than 5% by weight and less than 50% by weight per 100% by weight of the styrene isoprene copolymers (SIR).

According to a still more preferred embodiment of the above more preferred embodiment, the styrene isoprene copolymers (SIR) have a Tg_{DSC} of more than -25°C and less than -50°C.

According to a still more preferred embodiment of the above more preferred embodiment, the styrene butadiene isoprene copolymers (SBIR) have an isoprene content which is more than the styrene and butadiene content.

According to a still more preferred embodiment of the above more preferred embodiment, the styrene butadiene isoprene copolymers (SBIR) have an isoprene content of more than 50% by weight and less than 60% by weight per 100% by weight of the styrene butadiene isoprene copolymers (SBIR).

The total amount of the isoprene elastomer in the elastomer matrix of the rubber composition according to the invention is more than 27.00% by weight, preferably more than 27.50% by weight, of an isoprene elastomer per 100.00% by weight of the rubber composition.

A second aspect of the invention is the rubber composition according to the first aspect, wherein the total amount of the isoprene elastomer is more than 28.00% by weight, preferably more than 28.50% by weight, more preferably more than 29.00% by weight, per 100.00% by weight of the rubber composition.

A third aspect of the invention is the rubber composition according to the first aspect or the second aspect, wherein the total amount of the isoprene elastomer is less than 34.00% by weight, preferably less than 33.50% by weight, more preferably less than 33.00% weight, still more preferably less than 32.50% weight, particularly less than 32.00% weight, more particularly less than 31.50% weight, still more particularly less than 31.00% by weight, per 100% by weight of the rubber composition.

A fourth aspect of the invention is the rubber composition according to any one of the first to the third aspects, wherein the isoprene elastomer is selected from the group consisting of natural rubber, synthetic polyisoprenes and combinations thereof, preferably wherein the isoprene elastomer consists of natural rubber.

According to a preferred embodiment of the fourth aspect, the synthetic polyisoprene is a synthetic polyisoprene, preferably having a content (mol%) of cis-1,4 bonds of more than 90%, more preferably more than 95%, still more preferably more than 98%.

A fifth aspect of the invention is the rubber composition according to any one of the first to the fourth aspects, wherein the elastomer matrix further comprises a butadiene elastomer.

A sixth aspect of the invention is the rubber composition according to the fifth aspect, wherein the total amount of the butadiene elastomer is less than 31.00% by weight, preferably less than 30.50% by weight, more preferably less than 30.00% by weight, still more preferably less than 29.50% by weight, particularly less than 29.00% by weight, more particularly less than 28.50% by weight, still more particularly less than 28.00% by weight, advantageously less than 27.50%, per 100.00% by weight of the rubber composition.

A seventh aspect of the invention is the rubber composition according to the fifth aspect or the sixth aspect, wherein the total amount of the butadiene elastomer is more than 23.00% by weight, preferably more than 23.50% by weight, more preferably more than 24.00% by weight, still more preferably more than 24.50% by weight, particularly more than 25.00% by weight, more particularly more than 25.50% by weight, per 100.00% by weight of the rubber composition.

The butadiene elastomer is understood to mean all the elastomers predominantly composed of butadiene monomers.

An eighth aspect of the invention is the rubber composition according to any one of the fifth to the seventh aspects, wherein the butadiene elastomer is selected from the group consisting of butadiene polymers, butadiene copolymers and combinations thereof, preferably selected from the group consisting of polybutadienes (BR), styrene butadiene copolymers (SBR) and combinations thereof,

According to a preferred embodiment of the eighth aspect, the butadiene elastomer is selected from the group consisting of polybutadienes (BR) and combinations thereof.

According to a more preferred embodiment of the above preferred embodiment, the polybutadienes have a content (mol%) of 1,2-units of more than 4% and less than 80%.

According to a more preferred embodiment of the above preferred embodiment, the polybutadienes have a cis-1,4-content (mol%) of more than 80%.

According to a preferred embodiment of the eighth aspect, the butadiene copolymer is selected from the group consisting of styrene butadiene copolymers (SBR), butadiene isoprene copolymers (BIR), styrene butadiene isoprene copolymers (SBIR) and combinations thereof.

According to a more preferred embodiment of the above preferred embodiment, the butadiene copolymer is selected from the group consisting of styrene butadiene copolymers (SBR) and combinations thereof.

According to a still more preferred embodiment of the above more preferred embodiment, the styrene butadiene copolymers (SBR) have a glass transition temperature Tg_{DSC} of more than -100°C and less than 0°C, preferably more than -90°C and less than 0°C, more preferably more than -80°C and less than 0°C, still more preferably more than -70°C and less than 0°C, particularly more than -60°C and less than -10°C.

According to a still more preferred embodiment of the above more preferred embodiment, the styrene butadiene copolymers (SBR) have a styrene content of more than 5% by weight and less than 60% by weight, more particularly more than 20% by weight and less than 50% by weight, per 100% by weight of the styrene butadiene copolymers (SBR).

According to a still more preferred embodiment of the above more preferred embodiment, the styrene butadiene copolymers (SBR) have a content (mol%) of 1,2-bonds of the butadiene part of more than 4% and less than 75% and a content (mol%) of trans-1,4-bonds of more than 10% and less than 80%.

According to a more preferred embodiment of the above preferred embodiment, the butadiene copolymer is selected from the group consisting of butadiene isoprene copolymers (BIR) and combinations thereof.

According to a still more preferred embodiment of the above more preferred embodiment, the butadiene isoprene copolymers (BIR) have an isoprene content of more than 5% by weight and less than 50% by weight per 100% by weight of the butadiene isoprene copolymers (BIR).

According to a still more preferred embodiment of the above more preferred embodiment, the butadiene isoprene copolymers (BIR) have a Tg_{DSC} of from -80°C to - 40°C.

According to a more preferred embodiment of the above preferred embodiment, the butadiene copolymer is selected from the group consisting of styrene butadiene isoprene copolymers (SBIR) and combinations thereof. The styrene butadiene isoprene copolymers (SBIR) have a butadiene content which is more than the styrene and isoprene content.

According to a preferred embodiment of the invention, the elastomer matrix in the rubber composition according to the invention consists of the isoprene elastomer and the butadiene elastomer.

According to another preferred embodiment of the invention, the elastomer matrix in the rubber composition according to the invention comprises another elastomer or other elastomer than the isoprene elastomer and the butadiene elastomer.

Use may be made, as such, of any elastomer known to a person skilled in the art which is not defined above as isoprene elastomer or butadiene elastomer.

The rubber composition according to the invention is based on an anti-ozone wax (or called as an antiozonant wax).

The anti-ozone wax is well known as film-forming antiozonant waxes to a person skilled in the art. These film-forming antiozonant waxes may, for example, be paraffinic waxes, microcrystalline waxes or mixtures of paraffinic and microcrystalline waxes. They consist of a mixture of linear alkanes and of non-linear alkanes (isoalkanes, cycloalkanes, branched alkanes) resulting from the refining of oil or from the catalytic hydrogenation of carbon monoxide (Fischer-Tropsch process) predominantly comprising chains of at least 20 carbon atoms.

All the antiozonant waxes known to a person skilled in the art may be used, including natural waxes, such as, for example, candelilla wax or carnauba wax. These waxes may, furthermore, be used as blends.

The anti-wax commercially available is for example Varazon 4959, Varazon 6500 and Varazon 6810 from Sasol, Ozoace 0355 from Nippon Seiro, Negozone 9343 from H&R, and H3841 from Yanggu Huatai.

The total amount of the anti-ozone wax in the rubber composition according to the invention is more than 0.60% by weight, preferably more than 0.65% by weight, and less than 1.70% by weight, preferably less than 1.65% by weight, per 100.00% by weight of the rubber composition.

A ninth aspect of the invention is the rubber composition according to any one of the first to the eighth aspects, wherein the total amount of the anti-ozone wax is more than 0.70% by weight, preferably more than 0.75% by weight, more preferably more than 0.80% by weight, still more preferably more than 0.85% by weight, particularly more than 0.90% by weight, more particularly more than 0.95% by weight, still more particularly more than 1.00% by weight, advantageously more than 1.05% by weight, more advantageously more than 1.10% by weight, still more advantageously more than 1.15% by weight, especially more than 1.20% by weight, more especially more than 1.25% by weight, per 100.00% by weight of the rubber composition.

A tenth aspect of the invention is the rubber composition according to any one of the first to the ninth aspects, wherein the total amount of the anti-ozone wax is less than 1.60% by weight, preferably less than 1.55% by weight, more preferably less than 1.50% by weight, still more preferably less than 1.45% by weight, particularly less than 1.40% by weight, more particularly less than 1.35% by weight, per 100.00% by weight of the rubber composition.

According to a preferred embodiment of the invention, the anti-ozone wax comprises from 50% by weight to 75% by weight of linear alkanes comprising from 30 carbon atoms to 38 carbon atoms, with respect to the total amount of linear alkanes.

The rubber composition according to the invention is based on a crumb rubber. (abbreviated as "crumb" in the remainder of the text).

The crumbs are in the form of granules, optionally made into a sheet of rubber. Usually, crumb rubbers are derived from milling or micronization of cured rubber compositions already used for a first application, for example in tires; they are products of the recycling of materials.

The crumb rubber may be obtained by reducing scrap tires or other rubbers into granules with reinforcing materials such as steels or fibers removed along with any other contaminants such as dusts, glasses or rocks. "Rubber Chemistry and Technology" discloses many methods of grinding vulcanized or crosslinked rubbers into crumb rubber.

According to a preferred embodiment of the invention, the crumb rubber is generated from scrap tires.

According to a preferred embodiment of the invention, the crumb rubber is in the form of microparticles.

The term "microparticles" is intended to mean particles which have a particle size, namely their diameter in the case of spherical particles or their largest dimension in the case of anisometric particles, of a few microns or of a few tens microns or a few hundred microns.

The crumb rubber in the rubber composition according to the invention comprises crumb rubber particles having a particle size of less than 74µm.

A ratio by weight of the total amount of the crumb rubber particles having the particle size of less than 74µm to the total amount of the anti-ozone wax in the rubber composition according to the invention is more than 0.65.

An eleventh aspect of the invention is the rubber composition according to any one of the first to the tenth aspects, wherein the ratio by weight of the total amount of the crumb rubber particles having the particle size of less than 74µm to the total amount of the anti-ozone wax is more than 0.70, preferably more than 0.75, more preferably more than 0.80, still more preferably more than 0.85.

A twelfth aspect of the invention is the rubber composition according to any one of the first to the eleventh aspects, wherein the total amount of the crumb rubber particles having the particle size of less than 74µm is more than 0.90%, preferably more than 0.95% by weight, more preferably more than 1.00% by weight, still more preferably more than 1.05% weight, particularly more than 1.10% by weight, more particularly more than 1.15% by weight, per 100.00% by weight of the rubber composition.

The total amount by weight of the crumb rubber particles having the particle size of less than 74µm in the crumb rubber of the rubber composition according to the invention may be obtained from the particle size distribution determined in accordance with ASTM-D5644-01.

Alternatively, the crumb particle size weight distribution may be measured by laser particle size analysis, on a mastersizer 3000 device from Malvern. The measurement may be carried out by the liquid route, diluted in alcohol after an ultrasound pretreatment for 1 minute in order to guarantee the dispersion of the particles. The measurement may be carried out in accordance with standard ISO-13320-1 and may make it possible to determine in particular the D10 and the D50, that is to say the mean diameter below which respectively 10% by weight and 50% by weight of the total population of particles may be present.

The crumb rubber in the rubber composition according to the invention may comprise other crumb rubber particles having a particle size of more than or equal to 74µm.

According to a preferred embodiment of the invention, the crumb rubber in the rubber composition according to the invention is mechanically processed, cryogenically processed, or mechanically and cryogenically processed, that is, the crumb rubber is ground using a mechanical grinding process, a cryogenic process or both processes. In both processes, the steel components are removed using a magnetic separator and the fiber components are separated by air classifiers or other separation equipment. The mechanical grinding process uses a variety of grinding techniques, such as cracker mills, granulators, etc. to mechanically break down the rubber into small particles. In the cryogenic process, shredded rubber is frozen at an extremely low temperature then shattered into small particles.

According to a more preferred embodiment of the above preferred embodiment, the crumb rubber is cryogenically processed in accordance with micronization processes as described in US7445170 and US7861958.

The crumb rubber commercially available is for example PolyDyne 40, PolyDyne 80, PolyDyne 140 or PolyDyne 200 from Lehigh Technologies.

According to a preferred embodiment of the invention, the amount of the crumb rubber in the rubber composition according to the invention is more than 1.00%, preferably more than 2.00%, more preferably more than 3.00%, still more preferably more than 4.00%, by weight per 100% by weight of the rubber composition according to the invention.

According to a preferred embodiment of the invention, the amount of the crumb rubber in the rubber composition according to the invention is less than 20.00%, preferably less than 18.00%, more preferably less than 16.00%, still more preferably less than 14.00%, particularly less than 12.00%, more particularly less than 10.00%, by weight per 100% by weight of the rubber composition according to the invention.

The crumb rubber in the rubber composition according to the invention may consist of a composition based on all ingredients normally used in rubber compositions for rubber products.

According to a preferred embodiment of the invention, the crumb rubber in the rubber composition according to the invention consists of a composition based on an elastomer.

According to a more preferred embodiment of the above preferred embodiment, the crumb rubber comprises an elastomer that represents more than 30% by weight, preferably more than 35% by weight, more preferably more than 40% by weight, per 100% by weight of the crumb rubber, said percentage determined in accordance with ASTM E1131-03.

According to a still preferred embodiment of the above preferred embodiment or the above more preferred embodiment, the crumb rubber comprises an elastomer that comprises, preferably consists of, a diene elastomer.

According to a particular embodiment of the above still more preferred embodiment, the diene elastomer in the crumb rubber is selected from the group consisting of polybutadienes, polyisoprenes including natural rubber, butadiene copolymers and isoprene copolymers.

According to a particular embodiment of the above still more preferred embodiment, the molar content of units of diene origin (conjugated dienes) presents the diene elastomer in the crumb rubber is more than 50%, preferably more than 50% and less than 70%.

According to a preferred embodiment of the invention, the crumb rubber in the rubber composition according to the invention consists of a composition based on a filler.

According to a more preferred embodiment of the above preferred embodiment, the above amount of the filler in the crumb rubber is more than 5% by weight and less than 80% by weight, preferably more than 10% by weight and less than 75% by weight, more preferably more than 15% by weight and less than 70% by weight, of a filler per 100% by weight of the crumb rubber, said percentage being determined in accordance with ASTM E1131-03.

The term "filler" is intended to mean herein any type of filler, whether reinforcing filler (typically having nanometric particles, with a weight-average size preferably of less than 500 nm, in particular more than 20 nm and less than 200 nm) or non-reinforcing filler or inert filler (typically having micrometric particles, with a weight-average size preferably of more than 1µm, for example more than 2µm and less than 200µm). The weight-average size of the nanometric particles is measured in a manner well known to those skilled in the art (by way of example, according to patent application WO 2009/083160 paragraph 1.1). The weight-average size of the micrometric particles may be determined by mechanical screening.

According to a more preferred embodiment of the above preferred embodiment, the filler in the crumb rubber comprises a reinforcing filler, preferably the reinforcing filler comprises a reinforcing organic filler, a reinforcing inorganic filler or a combination thereof.

Use may be made of any type of reinforcing filler known for its capabilities of reinforcing a rubber composition which can be used for the manufacture of the article, for example a reinforcing organic filler, such as at least one carbon black, or a reinforcing inorganic filler, such as a silica (SiO₂), an alumina (Al₂O₃) or a combination thereof, with which at least one coupling agent is combined in a known way.

According to a still more preferred embodiment of the above more preferred embodiment, the reinforcing filler in the crumb rubber comprises a reinforcing organic filler, preferably at least one carbon black, more preferably representing more than 50% by weight, still more preferably more than 60% by weight, particularly more than 70% by weight, more particularly more than 80% by weight, still more particularly more than 90% by weight, advantageously 100% by weight, per 100% by weight of the reinforcing filler.

According to a still more preferred embodiment of the above more preferred embodiment, the reinforcing filler in the crumb rubber comprises a reinforcing organic filler, preferably at least one carbon black, more preferably representing from 20% by weight to 40% by weight, still more preferably from 25% by weight to 35% by weight, per 100% by weight of the crumb rubber.

The carbon black weight fraction may be measured by thermogravimetric analysis (TGA) in accordance with standard NF T-46-07, on an instrument from the company Mettler Toledo, model "TGA/DSC1". Approximately 20 g of sample may be introduced into the thermal analyzer, then subjected to a thermal program from 25°C to 600°C under an inert atmosphere (pyrolysable phase), then from 400°C to 750°C under an oxidizing atmosphere (oxidizable phase). The weight of the sample may be measured continuously throughout the thermal program. The organic matter content may correspond to the loss of weight measured during the pyrolysable phase related back to the initial weight of sample. The amount of carbon black may correspond to the loss of weight measured during the oxidizable phase related back to the initial weight of sample.

As carbon blacks, all carbon blacks, in particular blacks of the SAF, ISAF, HAF, FEF, GPF, HMF, SRF, and SRF type, conventionally used in tires ("tire-grade" blacks) are suitable, such as for example reinforcing carbon blacks of the 100, 200 or 300 series in ASTM grades (such as for example, the N115, N134, N234, N326, N330, N339, N347 or N375 blacks), or carbon blacks higher series, the 500, 600, 700, 800 or 900 series in ASTM grades (such as for example the N550, N660, N683, N772, N774, N880, N990, N991 blacks).

According to a more preferred embodiment of the above preferred embodiment, the filler in the crumb rubber comprises a non-reinforcing filler, preferably chalk, kaolin or a combination thereof.

The crumb rubber in the rubber composition according to the invention may consist of a composition based on usual additives generally used in the rubber compositions intended for rubber products. The additives may also be in the crumb rubber in the form of a residue or of a derivative, since they were able to react during the steps of producing the composition or of crosslinking the composition from which the crumb rubber is derived.

The crumb rubber in the rubber composition according to the invention may be simple ground/micronized rubber materials, without any other treatment.

A thirteenth aspect of the invention is the rubber composition according to any one of the first to the twelfth aspects, wherein the crumb rubber has not undergone any modification by a treatment selected from the group consisting of thermal, mechanical, biological, and chemical treatments and combinations thereof.

According to a preferred embodiment of the thirteenth aspect, the crumb rubber has an acetone extract of more than 3% by weight and less than 30% by weight, preferably more than 3% by weight and less than 15% by weight, more preferably more than 3% by weight and less than 10% by weight, per 100% by weight of the crumb rubber.

According to a preferred embodiment of the thirteenth aspect, the crumb rubber has a chloroform extract of more than 3% by weight and less than 85% by weight, preferably more than 3% by weight and less than 20% by weight, more preferably more than 5% by weight and less than 15% by weight, by weight per 100% by weight of the crumb rubber.

According to a preferred embodiment of the thirteenth aspect, the crumb rubber has a chloroform extract of which the weight-average molecular weight (Mw) is less than 10000 g/mol, preferably less than 8000 g/mol.

According to a preferred embodiment of the thirteenth aspect, a ratio by weight of a chloroform extract to an acetone extract in the crumb rubber is less than 1.5.

According to an embodiment of the invention, the crumb rubber in the rubber composition according to the invention undergoes a treatment in order to modify them. This treatment can consist of a chemical functionalization or devulcanization modification. It can also be a thermomechanical, thermochemical, biological, and the like, treatment.

According to an embodiment of the invention, the crumb rubber in the rubber composition according to the invention has a morphology modified by heat treatment, mechanical treatment, biological treatment, chemical treatment or a combination thereof. Preferably, the modified crumb rubber has an acetone extract of more than 5% by weight and less than 20% by weight, more preferably from 10% by weight to 18% by weight. Likewise, preferably, the modified crumb rubber has a chloroform extract of more than 15% by weight and less than 85% by weight, more preferably from 15% by weight to 50% by weight. Preferably, the chloroform extract of the modified crumb rubber has a weight-average molecular weight (Mw) of more than 10000 g/mol, more preferably of more than 20000 g/mol and still more preferably of more than 30000 g/ mol. Preferably, a ratio by weight of the chloroform extract to the acetone extract in the modified crumb rubber is more than 1.5 or equal to 1.5, preferably more than 2.

The amount of acetone extract or chloroform extract may be measured according to Standard ISO1407 by means of an extractor of Soxhlet type. A test sample (more than 500 mg and less than 5 g) may be introduced into an extraction chamber and then placed in the extractor tube of the Soxhlet. A volume of acetone or chloroform equal to two or three times of the volume of the extractor tube may be placed in the collector of the Soxhlet. The Soxhlet may be subsequently assembled and then heated for 16 h. The sample may be weighed after extraction. The amount of acetone extract or chloroform extract may correspond to the loss in weight of the sample during the extraction, with respect to its initial weight.

The molecular weights may be determined by size exclusion chromatography, according to a Moore calibration and in accordance with Standard ISO16014. The weight-average molecular weight (Mw) of the chloroform extract may be measured by size exclusion chromatography (SEC) with a refractive index (RI) detector. The system may be composed of an Alliance 2695 line from Waters, of a column oven from Waters and also of an RI 410 detector from Waters. The set of columns used may be composed of two PL Gel Mixed D columns (300×7.5mm 5µm), followed by two PL Ge1 Mixed E columns (300×7.5mm 3µm) from Agilent. These columns may be placed in a column oven thermostatically controlled at 35°C. The mobile phase used may be non-antioxidized tetrahydrofuran. The flow rate of the mobile phase may be 1 ml/ minute. The RI detector may be also thermostatically controlled at 35°C.The chloroform extract may be dried under a nitrogen stream. The dry extract may be subsequently taken up at 1g/l in non-antioxidized tetrahydrofuran at 250 ppm with stirring for 2 hours. The solution obtained may be filtered using a syringe and a single-use 0.45µm PTFE syringe filter. 100µl of the filtered solution may be injected into the conditioned chromatographic system at 1 ml/minute and 35°C. The Mw results may be provided by integration of the chromatographic peaks detected by the RI detector above a value of 2000 g/mol. The Mw may be calculated from a calibration carried out using polystyrene standards.

The rubber compositions according to the invention may be based on all or at least one portion of the usual additives generally used in the rubber compositions intended for rubber products (for example, tires, shoes, belt conveyers or rubber tracks), such as fillers other than crumb rubbers (for example, reinforcing fillers, reinforcing organic fillers (for example, carbon blacks), reinforcing inorganic fillers (for example, silicas) or combinations thereof, coupling agents, plasticizing agents (for example, liquid plasticizers (for example, oils), solid plasticizers (for example, hydrocarbon resins having or not having characters of tackifying resins) or combinations thereof), protection agents other than anti-ozone waxes (for example, chemical antiozonants, antioxidants or combinations thereof), pigments, anti-fatigue agents, reinforcing resins, methylene acceptors (for example phenolic novolak resin), methylene donors (for example, hexamethylenetetramine (HMT), hexamethoxymethylmelamine (H3M) or a combination thereof), processing acids, a crosslinking (vulcanization) system or a combination thereof.

According to a preferred embodiment of the invention, the rubber composition according to the invention is further based on a crosslinking system.

According to a more preferred embodiment of the above preferred embodiment, the crosslinking system in the rubber composition according to the invention comprises a vulcanization agent, preferably selected from the group consisting of sulfur (sulphur), a sulfur donor, a peroxide, a bismaleimide and a combination thereof, more preferably selected from the group consisting of sulfur and a combination thereof. The vulcanization agent is called "vulcanizing agent", "curative" or "curing agent". According to a still more preferred embodiment of the above more preferred embodiment, the sulfur donner is alkylphenol disulfide (abbreviated as "APDS"), more preferably para-(tert butyl) phenol disulfide. According to a still more preferred embodiment of the above more preferred embodiment, the total amount of vulcanization agent is more than 0.5 phr and less than 10 phr, preferably more than 0.5 phr and less than 3 phr.

According to a more preferred embodiment of the above preferred embodiment, the crosslinking system in the rubber composition according to the invention comprises a vulcanization accelerator, preferably a primary vulcanization accelerator, more preferably selected from the group consisting of an accelerator of sulfenamide type, an accelerator of thiazole type, an accelerator of thiuram type, an accelerator of dithiocarbamate type and a combination thereof, more preferably selected from the group consisting of an accelerator of sulfenamide type and a combination thereof. According to a still more preferred embodiment of the above more preferred embodiment, the accelerator of sulfenamide type is selected from the group consisting of N-Cyclohexyl-2-benzothiazolesulfenamide (abbreviated as "CBS"), N-(tert-Butyl)-2-benzothiazolesulfenamide (abbreviated as "TBBS"), N-tert-Butyl-2-benzothiazolesulfenimide (abbreviated as "TBSI"), N-Oxydiethylene-2-benzothiazolesulfenamide (abbreviated as "MBS"), N,N'-dicyclohexyl-2-benzothiazolesulfenamide (abbreviated as "DCBS") and a combination thereof. According to a still more preferred embodiment of the above more preferred embodiment, the accelerator of thiazole type is selected from the group consisting of 2- mercaptobenzothiazole (abbreviated as "MBT"), 2-mercaptobenzothiazyl disulfide (abbreviated as "MBTS"), Zinc-2-mercaptobenzothiazole (abbreviated as "ZMBT"), 2-(Morpholinothio)benzothiazole (abbreviated as "MDB") and a combination thereof. According to a still more preferred embodiment of the above more preferred embodiment, the accelerator of thiuram type is selected from the group consisting of Tetramethylthiuram Disulfide (abbreviated as "TMTD"), Tetraethylthiuram Disulfide (abbreviated as "TETD"), Tetrabutylthiuram disulfide (abbreviated as "TBTD"), Tetrakis(2-ethylhexyl) thiuram disulfide (abbreviated as "TOT-N"), Tetramethylthiuram Monosulfide (abbreviated as "TMTM"), Dipentamethylenethiuram Tetrasulfide (abbreviated as "DPTT"), Tetrabenzylthiuram Disulfide (abbreviated as "TBzTD") and a combination thereof. According to a still more preferred embodiment of the above more preferred embodiment, the accelerator of dithiocarbamate type is selected from the group consisting of Zinc Dimethyldithiocarbamate (abbreviated as "ZDMC"), Zinc Diethyldithiocarbamate (abbreviated as "ZDEC"), Zinc Dibutyldithiocarbamate (abbreviated as "ZDBC"), Zinc Ethylphenyldithiocarbamate (abbreviated as "ZEPC"), Zinc Dibenzyldithiocarbamate (abbreviated as "ZDBzC"), Zinc N-pentamethylenedithiocarbamate (abbreviated as "ZPDC") and a combination thereof. According to a still more preferred embodiment of the above more preferred embodiment, the total amount of the vulcanization accelerator is more than 0.5 phr and less than 5.0 phr.

According to a more preferred embodiment of the above preferred embodiment, the crosslinking system in the rubber composition according to the invention comprises a vulcanization retarder, for example N-cyclohexylthiophthalimide (abbreviated as "CTP").

According to a more preferred embodiment of the above preferred embodiment, the crosslinking system in the rubber composition according to the invention comprises a vulcanization activator, preferably selected from the group consisting of zinc oxide, fatty acid, zinc fatty acid ester, a guanidine derivative or a combination thereof. According to a still more preferred embodiment of the above more preferred embodiment, the fatty acid is stearic acid, lauric acid, palmitic acid, oleic acid, naphthenic acid or a combination thereof. According to a still more preferred embodiment of the above more preferred embodiment, the zinc fatty acid ester is zinc stearic acid, zinc lauric acid, zinc palmitic acid, zinc oleic acid, zinc naphthenic acid or a combination thereof. According to a still more preferred embodiment of the above more preferred embodiment, the guanidine derivative is diphenylguanidine.

The rubber compositions according to the invention can be used alone or as a blend (i.e., as a mixture) with any other rubber composition which can be used for the manufacture of rubber products.

It goes without saying that the invention relates to the rubber compositions described previously both in the uncured state or non-crosslinked state or also raw state (i.e., before curing) and in the cured state or crosslinked state or also vulcanized, state (i.e., after crosslinking or vulcanization).

According to a preferred embodiment of the invention, the rubber composition according to the invention is further based on a crosslinking system comprising a vulcanization agent, a vulcanization accelerator, a vulcanization retarder, a vulcanization activator or a combination thereof, and the rubber composition according to the invention is manufactured in a mixer using two successive preparation phases: a first phase of thermomechanical working or kneading (referred to as "non-productive" phase) at high temperature, up to a maximum temperature of more than 110°C and less than 200°C, preferably more than 110°C and less than 190°C, more preferably more than 130°C and less than 180°C, followed by a second phase of mechanical working (referred to as "productive" phase) at a lower temperature of less than or equal to 110°C, preferably more than 40°C and less than 100°C, more preferably more than 60°C and less than 100°C, finishing phase during which the vulcanization agent, the vulcanization accelerator and the vulcanization retarder or the combination thereof in the crosslinking system is incorporated. According to a more preferred embedment of the above preferred embodiment, the vulcanization activator is incorporated during the first non-productive phase, during the productive phase or during both of the phases, preferably during the first non-productive phase.

According to a more preferred embodiment of the above preferred embodiment, the first phase (the non-productive phase) is performed in several thermomechanical steps: during the first step in the several thermomechanical steps, the elastomer matrix, the crumb rubber (and optionally the anti-ozone wax, other ingredients or combinations thereof, with the exception of the vulcanization agent, the vulcanization accelerator, the vulcanization retarder or the combination thereof in the crosslinking system) are introduced into a mixer (preferably an internal mixer) at a temperature of more than 20°C and less than 100°C, preferably more than 25°C and less than 100°C; and after a few minutes, preferably from 0.5 minutes to 2 minutes, and a rise in the temperature equal to 90°C or more (preferably, 100°C), the elastomer matrix, the other ingredient and the combination thereof (that is to say, those which remain, if not all were introduced into the mixer in the first step (the non-productive phase)) are added all at once or portionwise, with the exception of the vulcanization agent, the vulcanization accelerator, the vulcanization retarder or the combination thereof in the crosslinking system, during a compounding ranging from 20 seconds to a few minutes; wherein the total duration of the kneading, in the first phase (the non-productive phase), is preferably more than 1 minute and less than 15 minutes, more preferably more than 2 minutes and less than 10 minutes, at a temperature of less than or equal to 190°C, preferably less than or equal to 180°C, more preferably of less than or equal to 170°C.

According to a still more preferred embodiment of the above preferred embodiment or the above more preferred embodiment, after cooling of the mixture thus obtained, the vulcanization agent, the vulcanization accelerator, the vulcanization retarder or the combination thereof in the crosslinking system is then incorporated at low temperature, preferably of less than or equal to 100°C, more preferably less than or equal to 90°C, in an external mixer, preferably an open mill; the whole is then mixed in the second phase (the productive phase) for a few minutes, preferably more than 2 minutes and less than 15 minutes, more preferably more than 5 minutes and less than 15 minutes.

According to a particular embodiment of the above preferred embodiment, the above more preferred embodiment or the above still more preferred embodiment, the rubber composition thus obtained in the mixer using two successive preparation phases is subsequently calendered, for example in the form of a sheet or of a plaque, in particular for laboratory characterization, or else extruded in the form of a rubber profiled element able to be used directly as a rubber product, for example, a tire sidewall, a tire tread, a shoe sole, a conveyor belt cover and a rubber track tread.

According to a more particular embodiment of the above preferred embodiment, the above more preferred embodiment, the above still more preferred embodiment or the particular embodiment, the crosslinking (or curing) is performed in a known manner at a temperature of more than 110°C and less than 200°C, preferably more than 130°C and less than 190°C, under pressure, for a sufficient time which may range, for example, between 5 and 90 mm, as a function notably of the curing temperature, of the crosslinking system adopted, of the kinetics of crosslinking of the rubber composition under consideration or else of the size of the rubber product.

According to a preferred embodiment of the invention, the rubber composition is a rubber composition for a rubber product coming into contact with the ambient air, particularly a rubber composition for a tire, a shoe, a conveyor belt or a rubber track, more particularly for a tire sidewall, a tire tread, a shoe sole, a conveyor belt cover or a rubber track tread, still more particularly a rubber composition for a tire sidewall.

A fourteenth aspect of the invention is a rubber product comprising a rubber composition according to any one of the first to the thirteenth aspects, preferably wherein the rubber product comprises a rubber part comprising a rubber composition according to any one of the first to the thirteenth aspects, more preferably wherein the rubber product is a tire, a shoe, a conveyor belt or a rubber track, still more preferably wherein the rubber part is a tire sidewall, a tire tread, a tire rim cushion, a shoe sole, a conveyor belt cover or a rubber track tread. The tire sidewall is one of tire parts and intended to contact with the ambient air, but not to contact with the ground. The tire tread is one of tire parts and intended to contact with the ambient air and the ground. The tire rim cushion is one of tire parts and intended to contact with the tire rim and the ambient air, but not to contact with the ground. The conveyor belt is a carrying medium of a belt conveyor system. The conveyor belt cover is one of the conveyor belt parts, also called as cover rubber or rubber cover, and intended to contact with the ambient air. The rubber track is one of continuous tracks, also called as rubber crawler or rubber track belt or rubber caterpillar track and intended to equip a tracked vehicle. The rubber track tread is one of the rubber track parts and intended to contact with the ambient air and ground.

A fifteenth aspect of the invention is a tire comprising a rubber composition according to any one of the first to the thirteenth aspects, preferably wherein the tire comprises a sidewall comprising a rubber composition according to any one of the first to the thirteenth aspects.

The above tires of the invention are particularly intended to equip passenger motor vehicles, including 4×4 (four-wheel drive) vehicles and SUV (Sport Utility Vehicles) vehicles, and industrial vehicles particularly selected from vans and heavy duty vehicles (i.e., bus or heavy road transport vehicles (lorries, tractors, trailers)).

The invention is further illustrated by the following non-limiting examples.

### Example

In order to confirm the effect of the invention, twelve rubber compositions (C1 to C5: examples according to the invention, T1: a reference, and T2 toT7: comparative examples) were used. Each of the rubber compositions is based on diene elastomers (a combination of natural rubber (abbreviated as "NR") and polybutadiene rubber (abbreviated as "BR") as an elastomer matrix), an anti-ozone wax with or without a crumb rubber that comprises crumb rubber particles having a particle size of less than 74µm. Each of the formulations of the rubber compositions is shown in Tables 1 and 2 with the amount of the various products expressed in percentage by weight per 100% by weight of each of rubber compositions. Each ratio by weight of the total amount of the crumb rubber particles having the particle size of less than 74µm to the total amount of the anti-ozone wax in each of the rubber compositions is shown in Tables 3 and 4.

Each rubber composition was produced as follows: The elastomer matrix, the anti-ozone wax, the crumb rubber and the various other ingredients, with the exception of sulfur (as a vulcanization agent) and N-Cyclohexyl-2-benzothiazolesulfenamide (abbreviated as "CBS") (as a vulcanization accelerator) in a crosslinking system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 minutes to 4 minutes, until a maximum "dropping" temperature of 165°C was reached. The mixture thus obtained was recovered and cooled and then the vulcanization agent and the vulcanization accelerator in the crosslinking system were incorporated on an external mixer (homofinisher) at 20°C to 30°C, everything being mixed (productive phase) for an appropriate time (for example, more than 5 minutes and less than 12 minutes).

The rubber compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting, assembling, or both to the desired dimensions, for instance as tire semi-finished products.

The ozone resistance performance of the rubber compositions was measured in accordance with the following method: 10 test specimens for each of the rubber compositions were prepared by curing at 150°C for 40 minutes in a bell press, cooling at ambient temperature for 1 day, and placing in an oven under air at a temperature of 77°C for 28 days. The 10 test specimens for each of the rubber compositions were placed on a trapezium at different elongations ranging from 10% to 100% in steps of 10% elongation. The test specimens called "B15" originated from a MFTR (known as Monsanto) plaque, the two beads of which located at the ends were used to hold the test specimen. The "B15" test specimens had the following dimensions 78.5 mm*15 mm*1.5 mm. After exposure for 192 hours to a temperature of 38°C and to an ozone content of 50 pphm (parts per hundred million), the facies of each of the test specimens was graded as a function of the number and of the depth of the cracks. This subjective grading ranges from 0 to 5 (0: no cracks; 1 to 4: presence of increasingly large and deep cracks; 5: breaking of the test specimen). That means the lower subjective grading, the better ozone performance. Each difference between the averages of the gradings of all the deformations of each sample (C1 to C5 and T2 to T7) and the reference (T1) is shown in Tables 5 and 6. A negative value in Tables 5 and 6 indicates an improvement of the ozone performance relative to the reference (T1).

The efflorescence performance of the rubber compositions was measured in accordance with the following method: After an operation of cutting out from the plaques of the rubber compositions in the cured state, the test specimens with a thickness of 2.5 mm were stoved at 70°C under air for 12 hours. They were subsequently stoved at 40°C under air for 4 weeks. After exiting from the stove and exposing to ambient temperature for 15 minutes, the test specimens each was scraped with a metal blade to reveal the efflorescence of the anti-ozone wax. The extent of the efflorescence phenomenon (white coloration of the surface) was subsequently evaluated by means of a subjective scale of values representative of the final appearance of the samples. The values of this subjective scale which were respectively obtained for the tested samples can vary from 0 to 3 and correspond to the "efflorescence grading". These values, ranging from 0 to 3, correspond to the following aspects for the samples:
0: No efflorescence. The scraped surface remains black.
1: Light efflorescence.
2: Moderate efflorescence.
3: Total efflorescence. The scraped surface is white.

The lower the value, the better the appearance of the efflorescence performance, that is to say the weaker the efflorescence. Each difference between the values of each sample (C1 to C5 and T2 to T7) and the reference (T1) is shown in Tables 5 and 6. A negative value in Tables 5 and 6 indicates an improvement of the efflorescence performance relative to the reference (T1).

The results from Tables 4 and 5 demonstrate that the examples (C1 to C5) according to the invention improve not only the ozone resistance performance, but also the efflorescence performance in comparison with the reference (T1), while the comparative examples (T2 to T7) worse perform in the ozone resistance performance, the efflorescence performance or both relative to the reference (T1).

In conclusion, the rubber composition according to the invention allows unexpectedly improved efflorescence performance without deteriorated ozone resistance performance.

**[Table 1]**

| Compositions | C1 | C2 | C3 | C4 | C5 |
|---|---|---|---|---|---|
| NR (1) | 30.64 | 30.64 | 30.64 | 30.57 | 29.18 |
| BR (2) | 27.18 | 27.18 | 27.18 | 27.11 | 25.87 |
| Anti-ozone wax (3) | 1.32 | 1.32 | 1.32 | 1.56 | 1.65 |
| Crumb rubber 1 (4) | 9.83 | | | | |
| Crumb rubber 2 (5) | | 9.83 | | 9.81 | 13.76 |
| Crumb rubber 3 (6) | | | 9.83 | | |
| Crumb rubber 4 (7) | | | | | |
| Crumb rubber 5 (8) | | | | | |
| Other additives | 31.02 | 31.02 | 31.02 | 30.95 | 29.54 |
| Crumb rubber particles having a particle size of less than 74µm in Crumb rubber | 1.18 | 2.36 | 9.83 | 2.35 | 3.30 |

(1) Natural rubber ;
(2) Nd Butadiene rubber;
(3) Anti-ozone wax ("Varazon 4959" from Sasol);
(4) Crumb rubber 1 (Crumb rubber particles having a particle size of less than 74µm: 12% by weight per 100% by weight of all of the crumb rubber, Crumb rubber particles having a particle size of more than or equal to 74µm: 88% by weight per 100% by weight of all of the crumb rubber, and the particle size measured according to ASTM D5644-01);
(5) Crumb rubber 2 (Crumb rubber particles having a particle size of less than 74µm: 24% by weight per 100% by weight of all of the crumb rubber, Crumb rubber particles having a particle size of more than or equal to 74µm: 76% by weight per 100% by weight of all of the crumb rubber, and the particle size measured according to ASTM D5644-01);
(6) Crumb rubber 3 (Crumb rubber particles having a particle size of less than 74µm: 100% by weight per 100% by weight of all of the crumb rubber, Crumb rubber particles having a particle size of more than or equal to 74µm: 0% by weight per 100% by weight of all of the crumb rubber, and the particle size measured according to ASTM D5644-01);
(7) Crumb rubber 4 (Crumb rubber particles having a particle size of less than 74µm: 0% by weight per 100% by weight of all of the crumb rubber, Crumb rubber particles having a particle size of more than or equal to 74µm and less than 180µm: 100% by weight per 100% by weight of all of the crumb rubber, and the particle size measured according to ASTM D5644-01); and
(8) Crumb rubber 5 (Crumb rubber particles having a particle size of less than 74µm: 0% by weight per 100% by weight of all of the crumb rubber, Crumb rubber particles having a particle size of more than or equal to 74µm and less than 850µm: 100% by weight per 100% by weight of all of the crumb rubber, and the particle size measured according to ASTM D5644-01).

**[Table 2]**

| Compositions | T1 | T2 | T3 | T4 | T5 | T6 | T7 |
|---|---|---|---|---|---|---|---|
| NR (1) | 34.05 | 32.73 | 30.64 | 30.64 | 26.02 | 30.50 | 30.87 |
| BR (2) | 30.20 | 29.02 | 27.18 | 27.18 | 31.80 | 27.05 | 27.38 |
| Anti-ozone wax (3) | 1.28 | 1.42 | 1.33 | 1.33 | 1.33 | 1.78 | 0.59 |
| Crumb rubber 1 (4) | | 3.70 | | | | | |
| Crumb rubber 2 (5) | | | | | 9.83 | 9.78 | 9.90 |
| Crumb rubber 3 (6) | | | | | | | |
| Crumb rubber 4 (7) | | | 9.83 | | | | |
| Crumb rubber 5 (8) | | | | 9.83 | | | |
| Other additives | 34.47 | 33.13 | 31.02 | 31.02 | 31.02 | 30.89 | 31.26 |
| Crumb rubber particles having a particle size of less than 74µm in Crumb rubber | 0 | 0.89 | 0 | 0 | 2.36 | 2.35 | 2.38 |

**[Table 3]**

| Compositions | C1 | C2 | C3 | C4 | C5 |
|---|---|---|---|---|---|
| Ratio by weight of the total amount of the crumb rubber particles having the particle size of less than 74µm to the total amount of the anti-ozone wax | 0.89 | 1.77 | 7.39 | 1.51 | 2.00 |

**[Table 4]**

| Compositions | T1 | T2 | T3 | T4 | T5 | T6 | T7 |
|---|---|---|---|---|---|---|---|
| Ratio by weight of the total amount of the crumb rubber particles having the particle size of less than 74µm to the total amount of the anti-ozone wax | - | 0.63 | - | - | 1.77 | 1.32 | 4.03 |

**[Table 5]**

| Compositions | C1 | C2 | C3 | C4 | C5 |
|---|---|---|---|---|---|
| Ozone resistance performance | -0.1 | -0.6 | -0.8 | -0.8 | -0.4 |
| Efflorescence performance | -2 | -2 | -2 | -1 | -2 |

**[Table 6]**

| Compositions | T1 | T2 | T3 | T4 | T5 | T6 | T7 |
|---|---|---|---|---|---|---|---|
| Ozone resistance performance | 0.0 | +0.1 | -0.3 | -0.2 | -0.5 | -0.9 | +0.4 |
| Efflorescence performance | 0 | 0 | 0 | 0 | 0 | 0 | -2 |

## Claims

1. A rubber composition based on at least:
- an elastomer matrix;
- an anti-ozone wax; and
- a crumb rubber;
wherein the elastomer matrix comprises an isoprene elastomer;
wherein the total amount of the isoprene elastomer is more than 27.00% by weight per 100.00% by weight of the rubber composition;
wherein the total amount of the anti-ozone wax is more than 0.60% by weight and less than 1.70% by weight per 100.00% by weight of the rubber composition;
wherein the crumb rubber comprises crumb rubber particles having a particle size of less than 74µm; and
wherein a ratio by weight of the total amount of the crumb rubber particles having the particle size of less than 74µm to the total amount of the anti-ozone wax is more than 0.65; the total amount by weight of the crumb rubber particles having the particle size of less than 74µm being measured according to the methods defined in the description.

2. The rubber composition according to Claim 1, wherein the total amount of the isoprene elastomer is more than 28.00% per 100.00% by weight of the rubber composition.

3. The rubber composition according to Claim 1 or Claim 2, wherein the total amount of the isoprene elastomer is less than 34.00% by weight per 100% by weight of the rubber composition.

4. The rubber composition according to any one of Claims 1 to 3, wherein the isoprene elastomer is selected from the group consisting of natural rubber, synthetic polyisoprenes and combinations thereof.

5. The rubber composition according to any one of Claims 1 to 4, wherein the elastomer matrix further comprises a butadiene elastomer.

6. The rubber composition according to Claim 5, wherein the total amount of the butadiene elastomer is less than 31.00% by weight per 100.00% by weight of the rubber composition.

7. The rubber composition according to Claim 5 or Claim 6, wherein the total amount of the butadiene elastomer is more than 23.00% by weight per 100.00% by weight of the rubber composition.

8. The rubber composition according to any one of Claims 5 to 7, wherein the butadiene elastomer is selected from the group consisting of butadiene polymers, butadiene copolymers and combinations thereof.

9. The rubber composition according to any one of Claims 1 to 8, wherein the total amount of the anti-ozone wax is more than 0.70% by weight per 100.00% by weight of the rubber composition.

10. The rubber composition according to any one of Claims 1 to 9, wherein the total amount of the anti-ozone wax is less than 1.60% by weight, preferably less than 1.55% by weight, more preferably less than 1.50% by weight, still more preferably less than 1.45% by weight, particularly less than 1.40% by weight, more particularly less than 1.35% by weight, per 100.00% by weight of the rubber composition.

11. The rubber composition according to any one of Claims 1 to 10, wherein the ratio by weight of the total amount of the crumb rubber particles having the particle size of less than 74µm to the total amount of the anti-ozone wax is more than 0.70.

12. The rubber composition according to any one of Claims 1 to 11, wherein the total amount of the crumb rubber particles having the particle size of less than 74µm is more than 0.90% by weight per 100.00% by weight of the rubber composition.

13. The rubber composition according to any one of Claims 1 to 12, wherein the crumb rubber has not undergone any modification by a treatment selected from the group consisting of thermal, mechanical, biological, and chemical treatments and combinations thereof.

14. A rubber product comprising a rubber composition according to any one of Claims 1 to 13, preferably wherein the rubber product comprises a rubber part comprising a rubber composition according to any one of Claims 1 to 13, more preferably wherein the rubber product is a tire, a shoe, a conveyor belt or a rubber track, still more preferably wherein the rubber part is a tire sidewall, a tire tread, a tire rim cushion, a shoe sole, a conveyor belt cover or a rubber track tread.

15. A tire comprising a rubber composition according to any one of Claims 1 to 13, preferably wherein the tire comprises a sidewall comprising a rubber composition according to any one of Claims 1 to 13.

## Patentansprüche

1. Kautschukzusammensetzung auf der Basis von mindestens:
- einer Elastomermatrix;
- einem Antiozonwachs; und
- einem Kautschukgranulat;
wobei die Elastomermatrix ein Isoprenelastomer umfasst;
wobei die Gesamtmenge des Isoprenelastomers mehr als 27,00 Gew.-% pro 100,00 Gew.-% der Kautschukzusammensetzung beträgt;
wobei die Gesamtmenge des Antiozonwachses mehr als 0,60 Gew.-% und weniger als 1,70 Gew.-% pro 100,00 Gew.-% der Kautschukzusammensetzung beträgt;
wobei das Kautschukgranulat Kautschukgranulatteilchen mit einer Teilchengröße von weniger als 74 µm umfasst; und
wobei ein Gewichtsverhältnis der Gesamtmenge der Kautschukgranulatteilchen mit der Teilchengröße von weniger als 74 µm zur Gesamtmenge des Antiozonwachses mehr als 0,65 beträgt; wobei die gewichtsbezogene Gesamtmenge der Kautschukgranulatteilchen mit der Teilchengröße von weniger als 74 µm gemäß den in der Beschreibung definierten Methoden gemessen wird.

2. Kautschukzusammensetzung nach Anspruch 1, wobei die Gesamtmenge des Isoprenelastomers mehr als 28,00 % pro 100,00 Gew.-% der Kautschukzusammensetzung beträgt.

3. Kautschukzusammensetzung nach Anspruch 1 oder Anspruch 2, wobei die Gesamtmenge des Isopren-Elastomers weniger als 34,00 % pro 100 Gew.-% der Kautschukzusammensetzung beträgt.

4. Kautschukzusammensetzung nach einem der Ansprüche 1 bis 3, wobei das Isopren-Elastomer aus der Gruppe bestehend aus Naturkautschuk, synthetischen Polyisoprenen und Kombinationen davon ausgewählt ist.

5. Kautschukzusammensetzung nach einem der Ansprüche 1 bis 4, wobei die Elastomermatrix ferner ein Butadienelastomer umfasst.

6. Kautschukzusammensetzung nach Anspruch 5, wobei die Gesamtmenge des Butadienelastomers weniger als 31,00 Gew.-% pro 100,00 Gew.-% der Kautschukzusammensetzung beträgt.

7. Kautschukzusammensetzung nach Anspruch 5 oder Anspruch 6, wobei die Gesamtmenge des Butadienelastomers mehr als 23,00 Gew.-% pro 100,00 Gew.-% der Kautschukzusammensetzung beträgt.

8. Kautschukzusammensetzung nach einem der Ansprüche 5 bis 7, wobei das Butadienelastomer aus der Gruppe bestehend aus Butadien-Polymeren, Butadien-Copolymeren und Kombinationen davon ausgewählt ist.

9. Kautschukzusammensetzung nach einem der Ansprüche 1 bis 8, wobei die Gesamtmenge des Antiozonwachses mehr als 0,70 Gew.-% pro 100,00 Gew.-% der Kautschukzusammensetzung beträgt.

10. Kautschukzusammensetzung nach einem der Ansprüche 1 bis 9, wobei die Gesamtmenge des Antiozonwachses weniger als 1,60 Gew.-%, bevorzugt weniger als 1,55 Gew.-%, weiter bevorzugt weniger als 1,50 Gew.-%, noch weiter bevorzugt weniger als 1,45 Gew.-%, speziell weniger als 1,40 Gew.-%, spezieller weniger als 1,35 Gew.-%, pro 100,00 Gew.-% der Kautschukzusammensetzung beträgt.

11. Kautschukzusammensetzung nach einem der Ansprüche 1 bis 10, wobei das Gewichtsverhältnis der Gesamtmenge der Kautschukgranulatteilchen mit der Teilchengröße von weniger als 74 µm zur Gesamtmenge des Antiozonwachses mehr als 0,70 beträgt.

12. Kautschukzusammensetzung nach einem der Ansprüche 1 bis 11, wobei die Gesamtmenge der Kautschukgranulatteilchen mit der Teilchengröße von weniger als 74 µm mehr als 0,90 Gew.-% pro 100,00 Gew.-% der Kautschukzusammensetzung beträgt.

13. Kautschukzusammensetzung nach einem der Ansprüche 1 bis 12, wobei das Kautschukgranulat keiner Modifizierung durch eine Behandlung, die aus der Gruppe bestehend aus thermischen, mechanischen, biologischen und chemischen Behandlungen und Kombinationen davon ausgewählt ist, durchlaufen hat.

14. Kautschukprodukt, umfassend eine Kautschukzusammensetzung nach einem der Ansprüche 1 bis 13, bevorzugt wobei das Kautschukprodukt ein Kautschukteil umfasst, das eine Kautschukzusammensetzung nach einem der Ansprüche 1 bis 13 umfasst, weiter bevorzugt wobei es sich bei dem Kautschukprodukt um einen Reifen, einen Schuh, ein Förderband oder eine Gummiraupe handelt, noch weiter bevorzugt wobei es sich bei dem Kautschukteil um eine Reifenseitenwand, eine Reifenlauffläche, ein Reifenfelgenpolster, eine Schuhsohle, eine Förderbandabdeckung oder eine Gummiraupenlauffläche handelt.

15. Reifen, umfassend eine Kautschukzusammensetzung nach einem der Ansprüche 1 bis 13, bevorzugt wobei der Reifen eine Seitenwand umfasst, die eine Kautschukzusammensetzung nach einem der Ansprüche 1 bis 13 umfasst.

## Revendications

1. Composition de caoutchouc à base d'au moins :
- une matrice élastomère ;
- une cire anti-ozone ; et
- un caoutchouc granulaire ;
la matrice élastomère comprenant un élastomère d'isoprène ;
la quantité totale de l'élastomère d'isoprène étant supérieure à 27,00 % en poids pour 100,00 % en poids de la composition de caoutchouc ;
la quantité totale de la cire anti-ozone étant supérieure à 0,60 % en poids et inférieure à 1,70 % en poids pour 100,00 % en poids de la composition de caoutchouc ;
le caoutchouc granulaire comprenant des particules de caoutchouc granulaire présentant une taille de particule inférieure à 74 µm ; et
un rapport en poids de la quantité totale des particules de caoutchouc granulaire ayant la taille de particule inférieure à 74 µm sur la quantité totale de cire anti-ozone étant supérieur à 0,65 ; la quantité totale en poids des particules de caoutchouc granulaire ayant une taille de particule inférieure à 74 µm étant mesurée selon les méthodes définies dans la description.

2. Composition de caoutchouc selon la revendication 1, la quantité totale de l'élastomère d'isoprène étant supérieure à 28,00 % pour 100,00 % en poids de la composition de caoutchouc.

3. Composition de caoutchouc selon la revendication 1 ou la revendication 2, la quantité totale de l'élastomère d'isoprène étant inférieure à 34,00 % en poids pour 100 % en poids de la composition de caoutchouc.

4. Composition de caoutchouc selon l'une quelconque des revendications 1 à 3, l'élastomère d'isoprène étant choisi dans le groupe constitué par le caoutchouc naturel, les polyisoprènes synthétiques et leurs combinaisons.

5. Composition de caoutchouc selon l'une quelconque des revendications 1 à 4, la matrice élastomère comprenant en outre un élastomère de butadiène.

6. Composition de caoutchouc selon la revendication 5, la quantité totale de l'élastomère de butadiène étant inférieure à 31,00 % en poids pour 100,00 % en poids de la composition de caoutchouc.

7. Composition de caoutchouc selon la revendication 5 ou la revendication 6, la quantité totale de l'élastomère de butadiène étant supérieure à 23,00 % en poids pour 100,00 % en poids de la composition de caoutchouc.

8. Composition de caoutchouc selon l'une quelconque des revendications 5 à 7, l'élastomère de butadiène étant choisi dans le groupe constitué par les polymères de butadiène, les copolymères de butadiène et leurs combinaisons.

9. Composition de caoutchouc selon l'une quelconque des revendications 1 à 8, la quantité totale de la cire anti-ozone étant supérieure à 0,70 % en poids pour 100,00 % en poids de la composition de caoutchouc.

10. Composition de caoutchouc selon l'une quelconque des revendications 1 à 9, la quantité totale de la cire anti-ozone étant inférieure à 1,60 % en poids, de préférence inférieure à 1,55 % en poids, plus préférablement inférieure à 1,50 % en poids, encore plus préférablement inférieure à 1,45 % en poids, en particulier inférieure à 1,40 % en poids, plus particulièrement inférieure à 1,35 % en poids, pour 100,00 % en poids de la composition de caoutchouc.

11. Composition de caoutchouc selon l'une quelconque des revendications 1 à 10, le rapport en poids de la quantité totale des particules de caoutchouc granulaire ayant la taille de particule inférieure à 74 µm sur la quantité totale de la cire anti-ozone étant supérieur à 0,70.

12. Composition de caoutchouc selon l'une quelconque des revendications 1 à 11, la quantité totale des particules de caoutchouc granulaire ayant la taille de particule inférieure à 74 µm étant supérieure à 0,90 % en poids pour 100,00 % en poids de la composition de caoutchouc.

13. Composition de caoutchouc selon l'une quelconque des revendications 1 à 12, le caoutchouc granulaire n'ayant subi aucune modification par un traitement choisi dans le groupe constitué par des traitements thermiques, mécaniques, biologiques et chimiques et des combinaisons correspondantes.

14. Produit en caoutchouc comprenant une composition de caoutchouc selon l'une quelconque des revendications 1 à 13, le produit en caoutchouc comprenant de préférence une partie en caoutchouc comprenant une composition de caoutchouc selon l'une quelconque des revendications 1 à 13, le produit en caoutchouc étant plus préférablement un pneumatique, une chaussure, une bande transporteuse ou une chenille en caoutchouc, la partie en caoutchouc étant encore plus préférablement un flanc de pneumatique, une bande de roulement de pneumatique, une couche de protection de jante de pneumatique, une semelle de chaussure, un revêtement de bande transporteuse ou une bande de roulement de chenille en caoutchouc.

15. Pneumatique comprenant une composition de caoutchouc selon l'une quelconque des revendications 1 à 13, le pneumatique comprenant de préférence un flanc comprenant une composition de caoutchouc selon l'une quelconque des revendications 1 à 13.
